(19) Europäisches Patentamt
European Patent Office
Office européen des brevets

(11) Veröffentlichungsnummer: **0 063 790**
**B1**

(12) **EUROPÄISCHE PATENTSCHRIFT**

(45) Veröffentlichungstag der Patentschrift: **13.08.86**

(51) Int. Cl.⁴: **C 03 C 4/04**, C 03 C 3/064, C 03 C 3/089, C 03 C 3/072, C 03 C 3/108

(21) Anmeldenummer: **82103391.7**

(22) Anmeldetag: **22.04.82**

(54) **Phototropes Glas mit einem Brechungsindex gleich oder grösser als 1,59, einer Abbezahl gleich oder grösser als 40 und einer Dichte gleich oder kleiner als 3,2 g/cm3.**

(30) Priorität: **29.04.81 DE 3117000**

(43) Veröffentlichungstag der Anmeldung: **03.11.82 Patentblatt 82/44**

(45) Bekanntmachung des Hinweises auf die Patenterteilung: **13.08.86 Patentblatt 86/33**

(84) Benannte Vertragsstaaten: **BE CH FR GB IT LI**

(56) Entgegenhaltungen:
**EP-A-0 041 789**
**DE-A-2 223 629**
**DE-A-2 809 409**
**FR-A-2 334 640**
**US-A-4 240 836**

(73) Patentinhaber: **Schott Glaswerke, Hattenbergstrasse 10, D-6500 Mainz (DE)**

(72) Erfinder: **Gliemeroth, Georg, Dr., Sertoriusring 62, D-6500 Mainz- Finthen (DE)**
Erfinder: **Eichhorn, Uwe, Dr., Am Hipperich 109, D-6500 Mainz- Mombach (DE)**

(74) Vertreter: **Rasper, Joachim, Dr., Bierstadter Höhe 22, D-6200 Wiesbaden (DE)**

**EP 0 063 790 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Ziel der Erfindung ist ein silberhalogenhaltiges phototropes Glas, das als Brillenglas Verwendung finden kann, und das sich gegenüber herkömmlichen phototropen Brillengläsern durch eine besondere kosmetische Eignung für alle Dioptriebereiche bei Plus- und Minusgläsern (durch Rand- bzw. Mittendicke) auszeichnet. Ziel der Erfindung ist somit ein phototropes, leichtes, hochbrechendes Brillenglas mit niedriger Dispersion.

Phototrope Gläser werden heute vorwiegend als Brillengläser verwendet und finden auch als Korrektionsgläser für Fehlsichtigkeit immer mehr Anwendung. Für die Korrektur der Fehlsichtigkeit mit Glas, das einen Brechungsindex von 1.523 hat, werden bei höheren Dioptrien (größerem Sehfehler) die Brillengläser immer voluminöser; das bedeutet größeres Gewicht der Gläser. Man hat deshalb hochbrechende und gleichzeitig relativ leichte Brillengläser gesucht und gefunden, doch scheiterte bisher der Versuch, solche Brillengläser auch mit phototropen Eigenschaften zu erzeugen. Grund dafür ist die Zusammensetzung der hochbrechenden leichtgewichtigen Brillengläser, die es nicht ermöglicht, die für die Phototropie notwendige Ausscheidung silberhalogenidhaltiger Bezirke im Glas durch entsprechende Anlaßbedingungen zu erreichen. Für phototrope Gläser auf der Basis von Silberhalogeniden ist diese Phasentrennung unabdingbar.

Schmitzt man z.B. die bekannten hochbrechenden, leichtgewichtigen Gläser der DE—C—2 259 183 mit Trägern der Phototropie, so ergibt sich eine weiße opake Masse, die nicht als Brillenglas verwendet werden kann.

Gut repräsentiert wird der Stand der Technik auf dem Gebiet der hochbrechenden leichtgewichtigen Gläser durch die DE—C—22 59 183, auf dem Gebiet der hochbrechenden phototropen Gläser durch die DE—C—22 23 629 und auf dem Gebiet der phototropen Gläser durch die DE—C—24 04 752, US—A—42 40 836 und EP—A—41789.

Da die in der DE—C—22 23 629 beschriebenen hochbrechenden phototropen Gläser als Nahteilmaterial in Mehrfokalbrillengläsern eingesetzt werden, werden an sie bezüglich der Verschmelzeigenschaften spezielle Forderungen gestellt. Dieses Ziel wird durch $La_2O_3$ Gehalte >12% erzielt. Die DE—A—21 40 915 enthält ebenfalls Gläser mit relativ hohem Brechungsindex, doch sollen die Gläser kein $SiO_2$ enthalten, weil das Produkt sonst opak wird. Aufgrund ihres hohen Gewichtes kommen die beiden Gläser in den genannten Schriften für das Ziel der Erfindung nicht in Betracht.

Die US—A—4240836 und die EP—A—41789 beschreiben herkömmliche, silberhalogenhaltige, phototrope Gläser, auf denen durch eine reduzierende Wärmebehandlung eine getönte Oberflächenschicht im unbestrahlten Zustand erzeugt wird.

Bei der Überprüfung der herkömmlichen silberhalogenhaltigen, phototropen Gläser, soweit sie vom Standard-Brechungsindex für Brillengläser von $n_d$=1.523 abweichende Eigenschaften besitzen, wurde gefunden, daß es unmöglich erscheint, ein $SiO_2$-haltiges phototropes Glas mit einem Brechungsindex größer oder gleich 1.59, einer Abbezahl größer oder gleich 40 und einer Dichte kleiner oder gleich 3.2 g/cm³ herzustellen.

Die große Schwierigkeit, höherbrechende, leichtgewichtige, $SiO_2$-gläser mit phototropen Eigenschaften herzustellen, liegt im Folgenden: Sowohl höherbrechende leichtgewichtige Gläser, versehen mit den Komponenten Silber und Halogenen, wie auch phototrope höherbrechende Gläser, versehen mit $SiO_2$ zur Stabilisierung und geeignet für die Massenproduktion, werden trüb bis opak.

Die Überprüfung der Gläser nach der DE—OS 22 56 775 erbrachte nur Gläser mit Brechungsindizes kleiner als 1.59, die der Gläser nach DE—A—22 60 879 nur Gläser mit Dichten über 3.2 g/cm³.

Die Abbezahl

$$V_d = \frac{n_d - 1}{n_F - n_C}$$

ist insofern von Bedeutung, als sie bei Werten <40 störende Farbsäume bei schräger Durchsicht aufgrund zu hoher Dispersion, d.h. zu starker Wellenlängenabhangigkeit des Brechungsindex, ergibt. Solche Farbsäume müssen vermieden werden.

Von Bedeutung ist auch die Realisierbarkeit unter den heute üblichen Bedingungen. Bestimmte Rohstoffe, wie z.B. Tantaloxid, haben heute so hohe Preise, daß ihre Verwendung für Brillengläser nur noch ganz begrenzt möglich ist, obwohl sie wegen ihrer Wirkung auf die Netzwerkbildung, d.h. für die im Produktionsprozess so wichtige Entglasungsstabilität von höchstem Interesse sind.

Hinzu kommt noch, daß aus Gründen der Massenfertigung über Wanne und automatische Presse (Viskositäts- und Kristallisationskriterien) ein Gehalt an $SiO_2$ von mindestens 10 Gew.-% für ein derartiges Brillenglas unabdingbar ist.

Ziel der Erfindung sind Gläser mit phototropen Eigenschaften dank eines Gehaltes an Silber, Halogenen und Kupfer oder anderen, dem Kupfer entsprechenden Sensibilisatoren, die einen Brechungsindex $n_d$ gleich oder größer 1.59, ein Abbezahl gleich oder größer 40 und eine Dichte kleiner oder gleich 3.2 g/cm³ besitzen.

Es hat sich gezeigt, daß sich allgemein das Ziel der Erfindung in Glassystemen erreichen läßt, die aus mindestens zwei Netzwerkbildnern, z.B. $SiO_2$ und $B_2O_3$

oder aus drei Netzwerkbildnern z.B. $SiO_2$, $B_2O_3$ und $P_2O_5$ bestehen.

Speziell wird das Ziel mit Gläsern erreicht, die zu mindestens 80 Mol.-% in dem Glas-System

$SiO_2—R_2O_3—R_2O—RO—RO_x—R_2O_5$

liegen, wobei

$R_2O_3$ für $Al_2O_3$, Selten-Erdoxide, $B_2O_3$,
$R_2O$ für Alkalimetalloxide,
RO für Erdalkalimetalloxide, PbO,
$RO_x$ für $ZrO_2$, $TiO_2$, $WO_3$ und
$R_2O_5$ für $Nb_2O_5$, $P_2O_5$ stehen,

und die Silber, Halogene und Sensibilisatoren, wie z.B. Kupfer, als ionische Verbindungen als Träger der Phototropie enthalten.

Es wurde gefunden, daß sich phototrope Gläser, die als Träger der Phototropie Ausscheidungen enthalten, welche aus Silber, Halogenen und Sensibilisatoren bestehen, herstellen lassern mit einem Brechungsindex größer oder gleich 1,59, einer Abbezahl größer oder gleich 40 und einer Dichte kleiner oder gleich 3,2 g/cm³, wenn man eine Glaszusammensetzung, ausgedrückt in Gew.-% auf Oxidbasis, wählt, die folgende Komponenten enthält:

| | |
|---|---|
| $SiO_2$ | 32—47 |
| $B_2O_3$ | 14,5—27 |
| $P_2O_5$ | 0—11 |

wobei: Σ $SiO_2$, $B_2O_3+P_2O_5$ zwischen 58,0 und 71,0

| | |
|---|---|
| $Al_2O_3$ | 0—0,4 |
| $ZrO_2$ | 1,5—10 |
| $La_2O_3$ | 0—23 |
| $Nb_2O_5$ | 0—2 |
| $WO_3$ | 0—1 |

wobei Σ $Al_2O_3$, $ZrO_2$, $La_2O_3$, $Nb_2O_5+WO_3$ zwischen 2,0 und 25,0

| | |
|---|---|
| MgO | 0—1 |
| CaO | 0—6 |
| SrO | 0—24 |

wobei: Σ Erdalkalioxide zwischen 0 und 24,0

| | |
|---|---|
| PbO | 0,5—12 |
| $TiO_2$ | 0,5—8 |

wobei: Σ $PbO+TiO_2$ zwischen 1,0 und 20,0
un wobei: Σ $La_2O_3$, SrO, PbO, $TiO_2$, $Nb_2O_5$, $ZrO_2$, $WO_3$ zwischen 12 und 34 Gew.-%

| | |
|---|---|
| $Li_2O$ | 0,5—6 |
| $Na_2O$ | 0—4 |
| $K_2O$ | 6 —12 |

wobei: Σ Alkalioxide zwischen 6,5 und 15
Rest: < 10 Gew.-%,
wobei das Glas darüber hinaus mindestens 0,05 Gew.-% $Ag_2O$, zwischen 0 und 0,1 Gew.-% Kupferoxid oder einen anderen Sensibilisator und mindestens 0,25 Gew.-% Halogene aufweist.

Ein Gehalt an $P_2O_5$ in einer Konzentration zwischen 0,01 und 11 Gew.-% ist günstig für die chemische Beständigkeit des phototropen Glases.

Die Netzbildner des Grundglases, d.h. die Komponenten $SiO_2$, $B_2O_3$ und $P_2O_5$ sollen in einer Konzentration von 58 bis 71 Gew.-% vorliegen. Alle erfindungsgemäßen Gläser sollen aber aus Gründen der möglichen Massenfertigung mindestens 32 Gew.-% $SiO_2$ enthalten.

Anstelle des $La_2O_3$ können andere Selten-Erdoxide oder Mischungen von $La_2O_3$ und anderen Selten-Erdoxiden verwendet werden.

Zur Erzeugung einer braunen Färbung im belichteten Zustand läßt sich das Glas mit Edelmetallen dotieren.

Zur Erzeugung von Farbtönen im unbelichteten Zustand läßt sich das Glas mit insgesamt 1 Gew.-% Nebengruppen-Metalloxiden und/oder insgesamt 5 Gew.-% (zusätzlichen) färbenden Selten-Erdmetalloxiden versetzen.

Die Konzentration der Träger der Phototropie, additiv über die Grundglaszusammensetzung hinaus, soll bei mindestens 0,1 Gew.-% für $Ag_2O$, bei mindestens 0.1 Gew.-% für Brom, bei mindestens 0,1 Gew.-% für Chlor sowie bei mindestens 0,004 Gew.-% für Kupferoxid liegen.

Werden die erfindungsgemäßen silberhalogenhaltigen, phototropen Gläser einer Bestrahlung durch aktinisches Licht ausgesetzt, so wird in diesen silberhalogenhaltigen Ausscheidungen Photolyse wirksam. Das dabei entwickelte Silber wächst zu Silberkolloiden und erzeugt eine Absorption im sichtbaren Spektralbereich. Wird das phototrope Glas nicht mehr durch entsprechende Strahlung angeregt, kehrt das System in seinen Ausgangszustand zurück.

Für die Herstellung der erfindungsgemäßen phototropen Gläser und die Einstellung ihrer phototropen Eigenschaften ist nicht nur die Einführung von Silber und Halogenen und Sensibilisatoren, wie z.B. Kupferoxid, ins Glas notwendig, sondern vorzugsweise auch eine Temperung der Gläser. (Als Temperung wird eine Erhitzung der Gläser auf 500 bis 720°C für eine Dauer von 26 Stunden bis 10 min definiert). Dabei wird durch die gewählten Konzentrationen die Qualität des Produktes beeinflußt.

Ist die Konzentration des Silbers zu niedrig bei einer ausreichenden Menge an Halogenen, so neigt, das Glas bei der Temperung zur Trübung. Mit steigendem Silbergehalt geht diese Trübung zurück, und es wird dann eine zunehmende Schwärzung im angeregten Zustand beobachtet. Ist die Silberkonzentration jedoch zu hoch gewählt, so neigt schon das ungetemperte Glas zur Trübung. Ebenso ist ein Einfluß der Silberkonzentration auf die Kinetik des phototropen Prozesses festzustellen. Bei zu niedrigen Silbergehalten ist die Kinetik schlecht; mit zunehmender Konzentration des Silbers verbessert sich die Kinetik, bis sie sich bei zu hohen Gehalten wieder verschlechtert. Die für jede einzelne Glaszusammensetzung optimale Silberkonzentration ist nur durch Reihenuntersuchungen festzustellen, jedoch sollte sie 0,1 Gew.-% in der Analyse nicht unterschreiten.

Die herkömmlicherweise verwendeten Halogene sind Brom und Chlor, jedoch werden auch bei Wahl nur eines der beiden genannten Halogene phototrope Eigenschaften in den erfindungsgemäßen Gläsern festgestellt. Technisch etwas kompliziert ist die Einstellung der geeigneten Halogenkonzentration, da die Dampfdrücke dieser Kompenten bei der Schmelztemperatur sehr hoch sind.

Die Wirkung der Halogenkonzentration auf die phototropen Eigenschaften ist ähnlich wie beim Silber Zu geringe Mengen Chlor und Brom bewirken eine Trübung im getemperten Glas; die Phototropie ist nur sehr schwach. Mit steigender Halogenkonzentration verstärkten sich die phototropen Eigenschaften; die Kinetik verbessert sich und die Schwärzung im angeregten Zustand nimmt ab. Ist der Halogengehalt zu hoch gewählt, zeigt schon das ungetemperate Glas Trübung.

Für jede gewählte Zusammensetzung der erfingungsgemäßen Gläser muß die geeignete Halogenkonzentration sowie das Verhältnis der Halogene zueinander durch Versuchsreihen festgestellt werden, jedoch sollten die Konzentrationen von Brom und Chlor jeweils 0,1 Gew.-% nicht unterschreiten.

Bei Einführung von CuO in ein kupferfreies phototropes Glas verbessert sich mit zunehmendem Kupferoxidgehalt die Kinetik des phototropen Prozesses; darüber hinaus ist eine geringere Abdunklungsfähigkeit des Glases und eine höhere Temperaturabhängigkeit zu bemerken.

Die Einstellung der Kupferkonzentration im phototropen Glas ist mit entschiedend für die Kinetik und die erreichbare Schwärzungsteife; sie beeinflußt darüber hinaus die Temperaturabhängigkeit des phototropen Prozesses.

Wird ein Gehalt an CuO von weniger als 0,004 Gew.-% gewählt, so scheint die Kinetik zu schlecht für opthalmische Anwendungen der Gläser zu sein.

Tabelle 1 zeigt Beispiele für erfindungsgemäße Gläser in Gew.-%; allen Gläsern wurde in der Synthese 0,27 Gew.-% $Ag_2O$, 0,64 Gew.-% Cl; 1,21 Gew.-% Br sowie 0,006 Gew.-% CuO zugegeben.

Die Angaben in der Tabelle 1 bedeuten: $n_d$ ist der Brechungsindex, D ist die Dichte in $g.cm^{-3}$, die Abbezahl ist als $v_d$ gekennzeichnet, RHWZ ist die Regenerationshalbwertzeit in min nach einer Standardbelichtung von 15 min mit 80000 lx Xenonlicht, bei der die Sättigungstransmission ST in % (bei 545 nm gemessen) erreicht wurde. R 30 ist der Transmissionswert in %, den das Glas nach 30 min Regeration erreicht. Alle Phototropie-Daten sind an 2 mm dicke Proben bei 20°C ermittelt.

TABELLE 1

| Nummer | 1 | 2 | 3 | 4 |
|---|---|---|---|---|
| $SiO_2$ | 35,00 | 35,00 | 34,00 | 44,10 |
| $B_2O_3$ | 26,00 | 26,00 | 25,00 | 20,00 |
| $P_2O_5$ | 1,55 | 0,50 | 0,25 | 0,25 |
| $Al_2O_3$ | — | — | 0,10 | 0,10 |
| $ZrO_2$ | 2,00 | 2,00 | 4,00 | 5,50 |
| $La_2O_3$ | 1,50 | 1,50 | 1,00 | 5,50 |
| $Nb_2O_5$ | 0,50 | 0,50 | 0,20 | 0,20 |
| $WO_3$ | 1,00 | 1,00 | 0,50 | 0,50 |
| MgO | 1,00 | — | 0,20 | 0,20 |
| CaO | 5,50 | 4,50 | 6,00 | 0,50 |
| SrO | 2,50 | 2,50 | 1,00 | 8,00 |
| PbO | 8,95 | 10,50 | 10,55 | 1,55 |
| $TiO_2$ | 2,50 | 3,50 | 3,00 | 5,70 |
| $Li_2O$ | 2,00 | 2,00 | 3,00 | 2,20 |
| $Na_2O$ | — | — | 0,20 | 2,20 |
| $K_2O$ | 10,00 | 10,00 | 10,00 | 9,00 |
| | 100,00 | 99,50 | 99,60 | 100,20 |
| nd | 1,593 | 1,6040 | 1,609 | 1,609 |
| $v_d$ | 58 | 62 | 60 | 48 |
| D ($gcm^{-3}$) | 2,85 | 2,87 | 2,90 | 2,74 |
| ST (%) | 32 | 27 | 36 | 30 |
| RHWZ (min) | 2,4 | 3,2 | 3,0 | 3,5 |
| R 30 (%) | 75 | 78 | 78 | 75 |

Die erfindungsgemäßen Brillengläser besitzen einen Brechungsindex größer oder gleich 1,59, eine Abbezahl größer oder gleich 40 und eine Dichte kleiner oder gleich 3,2 g/$cm^3$, eine gute chemische Beständigkeit und lassen sich ohne Schwierigkeiten wie optische Brillengläser schleifen und polieren.

Alle erfindungsgemäßen Beispiele lassen sich mit anderen als den angegebenen Silber-, Halogen- und Kupferkonzentrationen so erschmelzen, daß phototropen Eigenschaften variiert werden.

Alle erfindungsgemäßen Gläser können zur konstanten Einfärbung mit färbenden Metallverbindungen, wie NiO oder CoO usw. versetzt werden.

Ausführungsbeispiel

Das folgende Beispiel erläutert die Herstellung eines erfindungsgemäßen Glases.

Gemengesatz

662,4 g gemahlener Quarzsand
531,5 g Boarsäure
3,8 g Phosphorpentoxid
1,9 Aluminiummonohydrat
82,8 g Zirkonoxid
3,0 Niobpentoxid

7,5 g Wolframoxid
7,6 g Magnesiumcarbonat
201,6 g Kalziumcarbonat
22,3 g Strontiumcarbonat
53,6 g Bleimennige
85,9 g Titanoxid
82,5 g Lithiumcarbonat
56,7 g Natriumcarbonat
135,0 g Kaliumcarbonat
33,3 g Kaliumbromid
47,3 g Kaliumchlorid
8,8 g Silbernitrat
0,3 g Kupferoxid

Die Gemengebestandteile werden eingewogen und vermischt. Das Gemenge wird in einem 1 l-Platintiegel bei 1365°C eingelegt und aufgeschmolzen. Anschließend wird die Glasschmelze bei 1410°C geläutert, dann auf 1345° abgekühlt und während 18 min durch Rühren homogenisiert. Die Schmelze wird danach zu 4 mm dicken 70 mm breiten Glasbarren ausgewalzt.

Die Wärmebehandlung erfolgt bei 630°C für 1 h im Luftumwälzofen, anschließend wird mit 40 K/min auf Raumtemperatur abgekühlt.

An diesem Glas wurden

| | |
|---|---|
| ein Brechungsindex $n_d$ | von 1,605, |
| eine Disperson $\omega_d$ | von 50,0 und |
| eine Dichte D | von 2,79 $qcm^{-3}$ |

gemessen.

Die Messung der Phototropiekenndaten ergab bei 20°C an einem 2 mm dicken Glas eine
Sättigungstransmission von 29%, eine
Regenerationshalbwertzeit von 3,6 min und eine
Transmission nach 30 min Regeration von 78%.

**Patentansprüche**

1. Phototropes Glas, das als Träger der Phototropie Ausscheidungen aufweist, die Silber und Halogene und sensibilisatoren enthalten, dadurch gekennzeichnet, daß es einen Brechungsindex≥1,59, eine Abbezahl≥40 und eine Dichte≤3,2 $g.cm^{-3}$ besitzt und daß es ausgedrückt in Gew.-% auf Oxidbasis, enthält:

| | |
|---|---|
| $SiO_2$ | 32—47 |
| $B_2O_3$ | 14,5—27 |
| $P_2O_5$ | 0—11 |

wobei: Σ $SiO_2$, $B_2O_3$+$P_2O_5$ zwischen 58,0 und 71,0

| | |
|---|---|
| $Al_2O_3$ | 0—0,4 |
| $ZrO_2$ | 1,5—10 |
| $La_2O_3$ | 0—23 |
| $Nb_2O_5$ | 0—2 |
| $WO_3$ | 0—1 |

wobei Σ $Al_2O_3$, $ZrO_2$, $La_2O_3$, $Nb_2O_5$+$WO_3$ zwischen 2,0 und 25,0

| | |
|---|---|
| MgO | 0—1 |
| CaO | 0—6 |
| SrO | 0—24 |

wobei: Σ Erdalkalioxide zwischen 0 und 24,0

| | |
|---|---|
| PbO | 0,5—12 |
| $TiO_2$ | 0,5—8 |

wobei: Σ PbO+$TiO_2$ zwischen 1,0 und 20,0
und wobei: Σ $La_2O_3$, SrO, PbO, $TiO_2$, $Nb_2O_5$, $ZrO_2$, $WO_3$ zwischen 12 und 34 Gew.-%

| | |
|---|---|
| $Li_2O$ | 0,5—6 |
| $Na_2O$ | 0—4 |
| $K_2O$ | 6—12 |

wobei: Σ Alkalioxide zwischen 6,5 und 15
Rest: < 10 Gew.-%.

2. Glas nach Anspruch 1, dadurch gekennzeichnet, daß das $La_2O_3$ ganz oder teilweise durch andere Selten-Erdoxide ersetzt ist.

3. Glas nach einem der Ansprüche 1 bis 2, dadurch gekennzeichnet, daß es zum Zwecke einer Braunfärbung im belichteten Zustand mit Edelmetallen dotiert ist.

4. Glas nach einem der Ansprüche 1 bis 3, dadurch gekennzeichnet, daß es als Träger der Phototropie, zusätzlich zur Grundlaszusammensetzung enthält:
$Ag_2$ mindestens 0,1 Gew.-%
Brom mindestens 0,1 Gew.-%
Chlor mindestens 0,1 Gew.-%, sowie
Kupferoxid mindestens 0,004 Gew.-%.

5. Glas nach einem der Ansprüche 1 bis 4, dadurch gekennzeichnet, daß es zusätzlich bis zu 1 Gew.-% färbend Oxide enthält.

**Revendications**

1. Verre phototrope, qui comporte comme support de phototropie des structures qui contiennent de l'argent et des halogènes ainsi que des sensibilisateurs, caractérisé en ce qu'il a un indice de réfraction ≥1,59, un nombre d'Abbe ≥40 et une densité ≤3,2 $g.cm^{-3}$ et en ce que sa composition, exprimée en pourcentages en poids sur la base des oxydes, est la suivante:

| | |
|---|---|
| $SiO_2$ | 32—47 |
| $B_2O_3$ | 14,5—27 |
| $P_2O_5$ | 0—11 |

où: Σ $SiO_2$, $B_2O_3$+$P_2O_5$ compris entre 58,0 et 71,0

| | |
|---|---|
| $Al_2O_3$ | 0—0,4 |
| $ZrO_2$ | 1,5—10 |
| $La_2O_3$ | 0—23 |
| $Nb_2O_5$ | 0—2 |
| $WO_3$ | 0—1 |

où: Σ $Al_2O_3$, $ZrO_2$, $La_2O_3$, $Nb_2O_5$+$WO_3$ compris entre 2,0 et 25,0

| | |
|---|---|
| MgO | 0— 1 |
| CaO | 0— 6 |
| SrO | 0—24 |

où: Σ oxydes alcalino-terreux compris entre 0 et 24,0

| | |
|---|---|
| $PbO_2$ | 0,5—12 |
| $TiO_2$ | 0,5—8 |

où: Σ PbO+$TiO_2$ compris entre 1,0 et 20,0
et où: Σ $La_2O_3$, SrO, PbO, $TiO_2$, $Nb_2O_5$, $ZrO_2$, $WO_3$ compris entre 12 et 34% en poids

| | |
|---|---|
| $Li_2O$ | 0,5—6 |
| $Na_2O$ | 0—4 |
| $K_2O$ | 6—12 |

où: Σ oxydes alcalins compris entre 6,5 et 15
Reste: < 10% en poids.

2. Verre selon la revendication 1, caractérisé en ce que le $La_2O_3$ est remplacé en totalité ou en partie par d'autres oxydes de terres rares.

3. Verre selon l'une des revendications 1 et 2, caractérisé en ce que, en vue d'obtenir une coloration brune des la condition éclairée, il est dopé avec des métaux nobles.

4. Verre selon l'une des revendications 1 à 3, caractérisé en ce qu'il contient comme support de phototropie, en addition à la composition du verre de base:
— un moins 0,1% en poids d'$Ag_2O$
— au moins 0,1% en poids de brome
— au moins 0,1% en poids de chlore, et
— au moins 0,004% en poids d'oxyde de cuivre.

5. Verre selon l'une des revendications 1 à 4, caractérisé en ce qu'il contient additionnellement jusqu'à 1% en poids d'oxydes colorants.

**Claims**

1. A phototropic glass which as a carrier for phototropy contains precipitations containing silver and halogens and sensitizers, characterized in that the glass has a refractive index of ≥1,59, an Abbe number of ≥40, and a density of ≤3,2 $g \cdot cm^{-3}$, and that it comprises on the basis of oxides, given in % by weight

| | |
|---|---|
| $SiO_2$ | 32—47 |
| $B_2O_3$ | 14,5—27 |
| $P_2O_5$ | 0—11 |

wherein Σ $SiO_2$, $B_2O_3$+$P_2O_5$ is between 58,0 and 71,0

| | |
|---|---|
| $Al_2O_3$ | 0—0,4 |
| $ZrO_2$ | 1,5—10 |
| $La_2O_3$ | 0—23 |
| $Nb_2O_5$ | 0—2 |
| $WO_3$ | 0—1 |

wherein Σ $Al_2O_3$, $ZrO_2$, $La_2O_3$, $Nb_2O_5$+$WO_3$ is between 2,0 and 25,0

| | |
|---|---|
| MgO | 0—1 |
| CaO | 0—6 |
| SrO | 0—24 |

wherein Σ alkaline earth oxides is between 0—24,0

| | |
|---|---|
| PbO | 0,5—12 |
| $TiO_2$ | 0,5—8 |

wherein Σ PbO+$TiO_2$ is between 1,0 and 20,0
and wherein: Σ $La_2O_3$, SrO, PbO, $TiO_2$, $Nb_2O_5$, $ZrO_2$, $WO_3$ is between 12—34 weight-%

| | |
|---|---|
| $Li_2O$ | 0,5—6 |
| $Na_2O$ | 0—4 |
| $K_2O$ | 6—12 |

wherein: Σ alkalimetaloxides is between 6,5 and 15
remainder: <10% by weight.

2. A glass according to claim 1, characterised in, that $La_2O_3$ is substituted completely or partially by different rare earth metal oxides.

3. A glass according to one of the claims 1 or 2, characterized in that for the purpose of obtaining a brown colour of the glass in its exposed state, the glass is doped with noble metals.

4. A glass according to one of the claims 1 to 3, characterized in that it contains as carriers for phototropy, in addition to the basic glass composition:

$Ag_2O$ at least 0,1% by weight
Bromine at least 0,1% by weight
Chlorine at least 0,1% by weight
Copper oxid at least 0,004% by weight.

5. A glass according to any one of the claims 1 to 4, characterized in that it contains additionally up to 1% by weight of colouring oxides.